Europäisches Patentamt

European Patent Office

Office européen des brevets

(19)

(11) **EP 0 956 983 B1**

(12) **EUROPÄISCHE PATENTSCHRIFT**

(45) Veröffentlichungstag und Bekanntmachung des Hinweises auf die Patenterteilung:
**04.06.2003 Patentblatt 2003/23**

(51) Int Cl.7: **B60G 17/052**, B60T 13/68

(21) Anmeldenummer: **99104993.3**

(22) Anmeldetag: **12.03.1999**

(54) **Einrichtung zur Steuerung von Betriebsfunktionen eines Fahrzeuges**

Device for controlling functions of a vehicle

Dispositif de commande de fonctions d'un véhicule

(84) Benannte Vertragsstaaten:
**DE FR GB IT**

(30) Priorität: **11.05.1998 DE 19821036**

(43) Veröffentlichungstag der Anmeldung:
**17.11.1999 Patentblatt 1999/46**

(60) Teilanmeldung:
**02016681.5 / 1 254 792**

(73) Patentinhaber: **WABCO GmbH & Co. OHG**
**30453 Hannover (DE)**

(72) Erfinder:
• **Stender, Axel**
**31787 Hameln (DE)**

• **Witte, Norbert**
**31515 Wunstorf (DE)**

(74) Vertreter: **Schrödter, Manfred, Dipl.-Ing.**
**WABCO GmbH & Co. OHG**
**Postfach 91 12 62**
**30432 Hannover (DE)**

(56) Entgegenhaltungen:
**EP-A- 0 160 844**    **EP-A- 0 170 794**
**EP-A- 0 301 225**    **DE-A- 3 612 944**
**DE-A- 3 713 640**    **DE-A- 4 141 695**
**DE-A- 19 637 484**    **DE-C- 19 544 622**
**US-A- 5 193 063**

**Beschreibung**

Die Erfindung betrifft ein elektronisches Steuergerät gemäß dem oberbegriff des Patentanspruchs 1.

Eine Einrichtung gemäß der Gattung des Patentanspruchs 1 ist aus der DE 19 637 484 A1 bekannt.

Bei der bekannten Einrichtung zur Steuerung von Betriebsfunktionen eines Fahrzeuges handelt es sich um ein elektronisches Steuergerät zur Steuerung der Bremsanlage des Fahrzeuges. Die Bremsanlage dieses Fahrzeuges weist neben den eigentlichen Bremsen noch eine Anordnung von Sensoren, Stellgliedern sowie eine Drucklufterzeugungsanlage auf. Diese Komponenten sind über Druckluftleitungen und elektrische Leitungen miteinander verbunden. Das elektronische Steuergerät dient dabei zur Steuerung der Stellglieder in Abhängigkeit von den Signalen der Sensoren. Eine derartige Bremsanlage wird auch als elektronisch gesteuertes Bremssystem oder kurz EBS bezeichnet.

Derartige elektronisch gesteuerte Bremssysteme weisen als Sensoren üblicherweise einen Signalgeber für die Bremsbetätigung durch den Fahrer, welcher im Falle eines Zugfahrzeuges auch Bremswertgeber und im Falle eines Anhängefahrzeuges auch Anhängerbremsventil genannt wird, sowie Sensiermittel zur Ermittlung der Fahrzeugbeladung bzw. der Achslasten des Fahrzeuges auf. Des weiteren sind für Zusatzfunktionen wie Blockierverhinderung in der Regel Sensoren zur Ermittlung der Raddrehgeschwindigkeiten der einzelnen Räder des Fahrzeuges vorgesehen. Diese Eingangssignale werden in der bekannten Einrichtung unter Heranziehung von Steuerungsund Regelungsverfahren in Betätigungssignale für die Stellglieder, die zur Betätigung der Radbremsen und damit zur Abbremsung der einzelnen Räder des Fahrzeuges dienen, berechnet. Die in der Einrichtung ausgeführten Steuer- und Regelungsverfahren umfassen beispielsweise ein Verfahren zur Minimierung des Bremsbelagverschleisses, ein Verfahren zur Verteilung der Bremskräfte nach den jeweiligen Achslasten sowie ein Verfahren zur Verzögerungsregelung.

Es sind des weiteren Einrichtungen zur automatischen Steuerung des Anhebens und Absenkens von anhebbaren Fahrzeugachsen, d. h. sogenannten Liftachsen, bekannt (z.B. EP 0 170 794 A2). In luftgefederten Fahrzeugen bestehen derartige Einrichtungen zumeist aus einem Druckschalter, der den Luftdruck in den Federbälgen der Luftfederung ermittelt und bei Über- bzw. Unterschreitung eines bestimmten Luftdrucks ein Schaltsignal abgibt, und einer Stelleinrichtung zur Betätigung der anhebbaren Fahrzeugachse, die mit dem Schaltsignal des Druckschalters beaufschlagt wird. Die Stelleinrichtung besteht zumeist aus einem mit dem Schaltsignal beaufschlagbaren Ventil und einem oder mehreren Liftbälgen, die ähnlich wie Luftfederbälge ausgebildet sind, jedoch zum Anheben bzw. Absenken der anhebbaren Fahrzeugachse dienen. Das Ventil dient dabei zum Belüften und Entlüften der Liftbälge.

Einrichtungen zur automatischen Steuerung einer anhebbaren Fahrzeugachse gemäß der zuvor beschriebenen Ausführungsart sind aufwendig und teuer. Zudem ist aufgrund einer begrenzten Anzahl von Varianten der Druckschalter eine Anpaßbarkeit an sehr unterschiedliche Fahrzeugtypen nur begrenzt möglich.

Der Erfindung liegt daher die Aufgabe zugrunde, eine einfache und kostengünstige Einrichtung anzugeben, mittels derer eine zuverlässige automatische Steuerung der anhebbaren Fahrzeugachse mit geringem Aufwand ermöglicht wird.

Diese Aufgabe wird durch die in dem Patentanspruch 1, angegebene Erfindung gelöst. Vorteilhafte Weiterbildungen und Ausgestaltungen der Erfindung sind in den Unteransprüchen angegeben.

Als Fahrzeugbelastung wird im folgenden die Summe der Achslasten aller Achsen des Fahrzeuges bezeichnet, d.h. die Summe aus Eigengewicht des Fahrzeugaufbaus und Zuladung.

Die Erfindung hat den Vorteil, mit äußerst geringem Aufwand insbesondere ohne Bedarf an weiteren Eingangssignalen undsomit auch ohne zusätzliche Sensiermittel eine zuverlässige Steuerung von einer oder mehreren anhebbaren Fahrzeugachsen zu ermöglichen. Hierfür ist eine bekannte Einrichtung, wie z. B. ein elektronisches Steuergerät für ein elektronisch gesteuertes Bremssystem, lediglich um einen zusätzlichen Signalausgang für das weitere Stellsignal zur Steuerung der anhebbaren Fahrzeugachse zu erweitern. Außerdem ist eine geringfügige Erweiterung der in der Einrichtung ausgeführten Steueralgorithmen erforderlich. Eine besonders einfach zu realisierende Art dieser Erweiterung ist in dem Patentansprüchen 7 bis 13 angegeben.

In einer vorteilhaften Weiterbildung der Erfindung weist die Einrichtung zusätzlich einen oder mehrere Eingänge für Geschwindigkeitssignale auf. Zum Anschluß an diese Eingänge kommen in erster Linie Sensiermittel zur Ermittlung der Raddrehgeschwindigkeiten der einzelnen Räder des Fahrzeuges oder auch ein Geschwindigkeitssignal von einem Tachometer in Betracht. Durch Verwendung dieser weiteren Eingangssignale sowie einer entsprechenden Anpassung der Steuer- und Regelverfahren in der Einrichtung ist es möglich, weitere Betriebsfunktionen in dem Fahrzeug zu steuern, wie z. B. eine Antiblockierregelung (ABS), eine Antriebsschlupfregelung (ASR) oder auch eine automatische Niveauregelung. Hierfür sind in dem Fahrzeug selbstverständlich entsprechende Stelleinrichtungen, z. B. für den Fahrzeugmotor oder eine Luftfederungsanlage, vorzusehen.

Das an dem zusätzlichen Signalausgang der erfindungsgemäßen Einrichtung ausgegebene Stellsignal kann prinzipiell ein analoges Signal oder auch ein vielstufiges wertediskretes Signal sein. Hierdurch kann eine Vielzahl von unterschiedlichen Positionen der anhebbaren Fahrzeugachse eingestellt werden. Es ist auch möglich, z.B. unter Anwendung des aus der EP 0 170 794 A2 bekannten Verfahrens, eine Achslastregelung durch Variation des Stellsignals für die anhebbare Fahrzeugachse vorzusehen.

In einer weiteren vorteilhaften Weiterbildung der Erfindung weist das Stellsignal zum Anheben und Absenken der anhebbaren Fahrzeugachse zwei diskrete Signalzustände auf. Dies hat den Vorteil, daß der weitere Signalausgang in der Einrichtung sehr einfach aufgebaut sein kann, z. B. als Schalttransistor. Ein weiterer Vorteil hierbei ist, daß die Verarbeitung der Eingangssignale zu dem Stellsignal nach relativ einfachen Regeln erfolgen kann und keine aufwendigen Berechnungsalgorithmen oder Datentabellen erforderlich sind.

Eine vorteilhafte Möglichkeit, den jeweils erforderlichen Signalzustand aus den zwei vorhandenen Signalzuständen auszuwählen, besteht gemäß Patentanspruch 7 darin, das Stellsignal auf den Zustand "Fahrzeugachse anheben" zu setzen, wenn die Bedingung

$$M_{mess} < \frac{M_{zul} \cdot K_1 \cdot (n-i)}{n}$$

erfüllt ist. In allen anderen Fällen wird demzufolge das Stellsignal "Fahrzeugachse absenken" erzeugt. Zur Evaluierung der zuvor genannten Bedingung sind nur relativ wenige, in einem elektronischen Bremssteuersystem der gattungsgemäßen Art üblicherweise vorhandene Größen erforderlich, nämlich ein Meßwert für die Fahrzeugbelastung ($M_{mess}$), die zulässige Belastung des Fahrzeuges ($M_{zul}$), eine fahrzeugspezifische Konstante ($K_1$), die Gesamtanzahl der Fahrzeugachsen (n) und die Anzahl der mittels des Stellsignals anhebbaren Fahrzeugachsen (i).

Die Größe Meßwert der Fahrzeugbelastung ($M_{mess}$) wird in derartigen elektronisch gesteuerten Bremssystemen zur Bestimmung der notwendigen Bremskraft ohnehin benötigt und steht demzufolge regelmäßig zur Verfügung. Es ist üblich, zur Bestimmung des Meßwertes der Fahrzeugbelastung ($M_{mess}$) ein Sensiermittel zu verwenden, welches ein Signal abgibt, das die Auflagekraft des Fahrzeugaufbaus auf einer oder mehreren nicht anhebbaren Fahrzeugachsen repräsentiert, d.h. es wird im allgemeinen nicht an jeder einzelnen Fahrzeugachse die dort auftretende Achslast ermittelt. Statt dessen wird bei Fahrzeugen mit Luftfederung der Druck in den Luftfederbälgen gemessen. Das Sensiermittel ist dann als Drucksensor ausgebildet. Bei Fahrzeugen mit z.B. Blattfederung kann als Sensiermittel ein Kraftsensor, der die Achslast einer Achse ermittelt, oder vorzugsweise ein Wegsensor, der den relativen Abstand zwischen dem Fahrzeugaufbau und einer der Fahrzeugachsen ermittelt, verwendet werden.

Die Bestimmung des Meßwertes ($M_{mess}$) erfolgt gemäß dem folgenden Grundprinzip:

$$M_{mess} = a \cdot x + b$$

Hierbei ist x ein vom Sensiermittel ermittelter Wert, also entweder ein Druckwert (p), ein Kraftwert (F) oder ein Abstandswert (s). Bei Drucksensierung stellt a die Querschnittsfläche von Luftfederbälgen, bei Kraftsensierung eine Kraftkonstante und bei Abstandssensierung eine Federkonstante der Fahrzeugfederung dar. In der weiteren Konstanten b kann bei Bedarf ein Sensoroffset vorgesehen sein.

Eine gemeinsame Eigenschaft aller zuvor erwähnten Arten der Bestimmung des Meßwertes ($M_{mess}$) besteht darin, daß infolge des Anhebens der anhebbaren Fahrzeugachse bzw. der anhebbaren Fahrzeugachsen der von dem Sensiermittel abgegebene Wert (p, F, oder s) ansteigt, ohne daß eine Veränderung der Fahrzeugbeladung vorgenommen wurde, was auf die Verteilung der Fahrzeugbelastung auf eine geringere Zahl von Fahrzeugachsen zurückzuführen ist. Hierbei zeigt der Meßwert ($M_{mess}$) eine scheinbare Vergrößerung der Fahrzeugbelastung an. Die Verwendung des erfindungsgemäßen Verfahrens hat den Vorteil, daß der zuvor beschriebene Effekt kompensiert wird und keine nachteiligen Auswirkungen auf die Steuerung der anhebbaren Fahrzeugachse bzw. der anhebbaren Fahrzeugachsen hat.

Die übrigen Größen stellen fahrzeugspezifische Werte dar, die beispielsweise in einem Parameterspeicher der erfindungsgemäßen Einrichtung gespeichert sind. Die fahrzeugspezifische Konstante ($K_1$) berücksichtigt das Eigengewicht der anhebbaren Fahrzeugachse. Sie kann gemäß den Angaben im Ausführungsbeispiel durch Versuche ermittelt werden. Die zulässige Belastung des Fahrzeuges ($M_{zul}$) kann beispielsweise den Fahrzeugpapieren oder einem an dem Fahrzeug angebrachten Typenschild entnommen werden.

Der oben erwähnte Ausdruck

$$\frac{M_{zul} \cdot K_1 \cdot (n-i)}{n}$$

kann auch in Form eines einzigen Wertes in der erfindungsgemäßen Einrichtung gespeichert werden.

In einer vorteilhaften Weiterbildung dieser Erfindung wird das Stellsignal "Fahrzeugachse absenken" erst erzeugt, wenn die Bedingung

$$M_{mess} \geq M_{zul}$$

erfüllt ist. Hierbei werden die bereits zuvor erwähnten Größen Meßwert der Fahrzeugbelastung ($M_{mess}$) und die zulässige Belastung des Fahrzeuges ($M_{zul}$) berücksichtigt.

Die Verwendung zweier Bedingungen für die Festlegung der zwei Signalzustände hat den Vorteil, daß die Umschaltpunkte von dem einen zu dem anderen Signalzustand jeweils getrennt optimiert werden können. Insbesondere ist es möglich, eine Hysterese für die Umschaltung festzulegen. Die Hysterese wird dann in der fahrzeugspezifischen Konstante ($K_1$) berücksichtigt.

In einer Weiterbildung des zuvor erwähnten Verfahrens wird das Stellsignal "Fahrzeugachse anheben" unter Berücksichtigung der Masse ($M_{lift}$) der anhebbaren Fahrzeugachse bzw. der Fahrzeugachsen erzeugt, wenn die Bedingung

$$M_{mess} < \frac{M_{zul} \cdot K_2 \cdot (n-i)}{n} - M_{lift}$$

erfüllt ist. Hierdurch ist eine einfachere Anpaßbarkeit des Verfahrens an unterschiedliche Fahrzeugtypen insbesondere mit einer unterschiedlichen Anzahl anhebbarer Fahrzeugachsen mit hohem Eigengewicht möglich. Eine spezielle fahrzeugspezifische Festlegung der hier verwendeten Konstante ($K_2$) kann in vielen Fällen entfallen, d.h. es kann eine universelle Konstante benutzt werden. Die Konstante ($K_2$) ist demzufolge um den von der Masse ($M_{lift}$) der anhebbaren Fahrzeugachse hervorgerufenen Anteil der Konstante ($K_1$) bereinigt. Die Konstante ($K_2$) bedarf daher nur in wenigen Fällen einer fahrzeugspezifischen Festlegung.

Die zuvor erwähnte Masse ($M_{lift}$) der anhebbaren Fahrzeugachse bzw. der Fahrzeugachsen kann als weiterer Parameter in der Einrichtung gespeichert sein. In einer vorteilhaften Weiterbildung der Erfindung wird die Masse ($M_{lift}$) der anhebbaren Fahrzeugachse bzw. der Fahrzeugachsen automatisch bei einem Anhebe- oder Absenkvorgang dieser Fahrzeugachse bzw. der Fahrzeugachsen bestimmt, indem eine betragsmäßige Differenzbildung zweier aus den Meßwerten der Fahrzeugbelastung ($M_{mess}$) abgeleiteter Werte jeweils unmittelbar vor dem Anheben oder Absenken der Fahrzeugachse und nach dem Abklingen von Einschwingvorgängen berechnet wird. Es ist ebenfalls vorteilhaft, den jeweils neu berechneten Wert mit weiteren, zuvor berechneten Werten der Masse ($M_{lift}$) auf Plausibilität zu vergleichen oder auch neu berechnete Werte einer Filterung zu unterwerfen. Vorteilhaft ist auch die Speicherung des Wertes ($M_{lift}$) in einem nichtflüchtigen Speicher in der erfindungsgemäßen Einrichtung, so daß unmittelbar nach der Inbetriebnahme des Fahrzeuges, d. h. bereits vor dem ersten Anhebe- oder Absenkvorgang der Fahrzeugachse, bereits die Masse ($M_{lift}$) dieser Fahrzeugachse verfügbar ist.

In einer weiteren vorteilhaften Weiterbildung der Erfindung wird das Stellsignal nur beim Stillstand des Fahrzeuges verändert. Dies hat den Vorteil, daß fahrtbedingte Störeinflüsse, beispielsweise infolge von Bodenwellen, Kurvenfahrt oder starker Beschleunigung und Verzögerung, auf den Meßwert der Fahrzeugbelastung ($M_{mess}$) bei der Bestimmung des Stellsignals außer Betracht bleiben.

Die in den Ansprüchen 7 bis 13 angegebenen Ausgestaltungen und Weiterbildungen der Erfindung sind bei allen Einrichtungen zur Steuerung von Betriebsfunktionen eines Fahrzeuges, bei denen eine Steuerung einer oder mehrerer anhebbarer Fahrzeugachsen vorgesehen ist, vorteilhaft anwendbar, so z.B. bei Einrichtungen zur Steuerung der Betriebsfunktionen Bremsfunktion, Blockierverhinderung, Niveauregelung, Antriebskraftsteuerung und Getriebesteuerung, wobei die Einrichtung zur Steuerung einer oder mehrerer dieser Betriebsfunktionen ausgelegt sein kann. Eine Anwendung in einer ausschließlich zur Steuerung einer oder mehrerer anhebbarer Fahrzeugachsen vorgesehenen Einrichtung ist ebenfalls vorteilhaft.

Die Erfindung wird im folgenden anhand eines Ausführungsbeispiels unter Zuhilfenahme von Zeichnungen näher erläutert.

Es zeigen

Fig. 1    eine schematische Darstellung der erfindungsgemäßen Einrichtung zur Steuerung von Betriebsfunktionen eines Fahrzeuges und

Fig. 2    das erfindungsgemäße Verfahren nach Art eines Flußdiagramms.

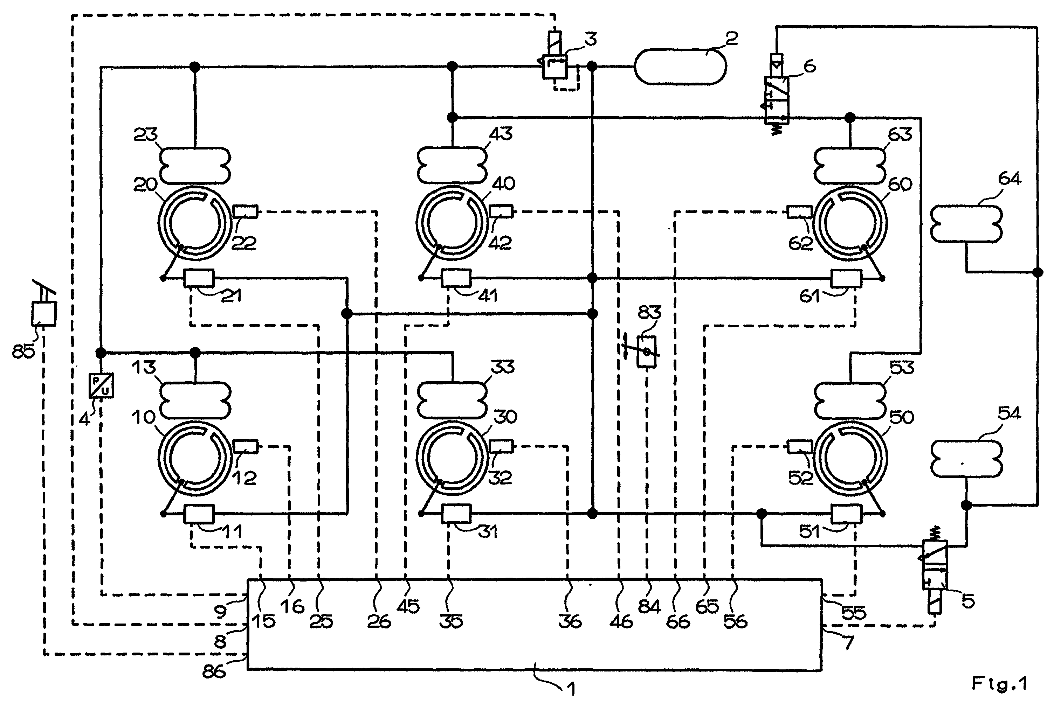

In der Fig. 1 sind Druckmittelleitungen mit durchgehenden Linien und elektrische Leitungen mit gestrichelten Linien dargestellt. Die elektrischen Leitungen können auch ganz oder teilweise als serielles Bussystem ausgebildet sein.

In der Fig. 1 ist beispielhaft ein elektronisch gesteuertes Bremssystem (EBS) für ein Anhängefahrzeug mit drei Achsen dargestellt, wobei eine der drei Achsen als anhebbare Fahrzeugachse ausgebildet ist. Des weiteren sind in der Fig. 1 die für eine Luftfederung mit einer Niveauregelung sowie für eine Anhebeeinrichtung für die anhebbare Fahrzeugachse erforderlichen Komponenten dargestellt.

In der Darstellung gemäß Fig. 1 sind folgende Arten von Komponenten dargestellt:

- Signalerzeugungseinrichtung (85) zur Erzeugung eines Bremsbetätigungssignals.
  In einem Zugfahrzeug ist diese Signalerzeugungseinrichtung üblicherweise als Bremswertgeber, der mechanisch mit dem Bremspedal in dem Zugfahrzeug verbunden ist, ausgebildet. Ein derartiger Bremswertgeber ist in der Fig. 1 symbolisch dargestellt, obwohl ein derartiges Teil in einem Anhängefahrzeug üblicherweise nicht vorhanden ist. Im Falle eines Anhängefahrzeuges würde das zugfahrzeugseitige Signal des Bremswertgebers mittels entsprechender Übertragungseinrichtungen dem Anhängefahrzeug zugeleitet werden.

- Radbremsen (10, 20, 30, 40, 50, 60) zur Erzeugung von Bremskräften an den Rädern des Fahrzeuges. Die Radbremsen sind in bekannter Weise z. B. als Trommel- oder Scheibenbremsen ausgebildet und werden über Betätigungshebel betätigt.

- Bremsaktuatoren (11, 21, 31, 41, 51, 61) zur Betätigung der Radbremsen (10, 20, 30, 40, 50, 60) mittels der zuvor genannten Bremshebel.
  Die Bremsaktuatoren sind druckmittelseitig mit einem Vorratsdruck verbunden und erhalten über jeweils eine ihnen zugeordnete elektrische Leitung Bremsanforderungssignale, die sie in eine Betätigungskraft bzw. einen Betätigungshub umwandeln, mit dem wiederum die Bremshebel beaufschlagt werden. Die Bremsaktuatoren sind in der Fig. 1 schematisch dargestellt. Sie können in der Praxis unterschiedlich ausgebildet sein. So ist beispielsweise eine Auslegung als Proportionalventil denkbar, welches den eingangsseitigen Vorratsdruck gestuft an einen Bremszylinder abgibt, der dann den Bewegungshub ausführt. Das elektrische Bremsanforderungssignal ist in diesem Fall vorzugsweise als pulsweitenmoduliertes Rechtecksignal ausgebildet. In einer anderen Auslegung kann der Aktuator neben den zuvor erwähnten Komponenten auch noch eine integrierte elektronische Einrichtung enthalten, z. B. mit einem Mikroprozessor und einer seriellen Schnittstelleneinrichtung. In diesem Fall würde der Mikroprozessor ein entsprechendes Ansteuersignal für das Proportionalventil aus den ihm von der seriellen Schnittstelleneinrichtung zugeleiteten Informationen generieren. In dieser Ausführungsform sind die zu den Aktuatoren führenden elektrischen Leitungen vorzugsweise als serielles Bussystem ausgeführt.

- Drehgeschwindigkeitssensoren (12, 22, 32, 42, 52, 62) zur Ermittlung von Drehgeschwindigkeiten der Fahrzeugräder in einer von Antiblockiersystemen her bekannten Weise.
  Die Drehgeschwindigkeitssensoren stehen mit einem an dem jeweiligen Rad angebrachten Polrad (nicht dargestellt) in Wirkverbindung.

- Druckluftvorratsbehälter (2).
  Der Druckluftvorratsbehälter (2) symbolisiert in diesem Ausführungsbeispiel eine Drucklufterzeugungsanlage üblicher Bauart, mit einem Kompressor, einem Lufttrockner und einem Rückschlagventil. Der Übersichtlichkeit halber ist in der Fig. 1 von diesen Komponenten jedoch nur der Druckluftvorratsbehälter dargestellt.

- Luftfederbälge (13, 23, 33, 43, 53, 63) zur Federung der einzelnen Räder und zur Höhenverstellung des Fahrzeugaufbaus gegenüber den Rädern.
  Die Luftfederbälge sind über eine Ventileinrichtung (3) an den Vorratsdruck oder die Atmosphäre anschließbar.

- Liftbälge (54, 64) zum Anheben bzw. Absenken der die Radbremsen (50, 60) tragenden anhebbaren Fahrzeugachse. Die Liftbälge sind in gleicher oder ähnlicher Weise wie die Luftfederbälge (13, 23, 33, 43, 53, 63) ausgebildet und können ebenfalls an den Vorratsdruck oder die Atmosphäre über Ventileinrichtungen (5, 6) angeschlossen werden.

- Ventileinrichtungen (3, 5, 6) zur Steuerung der Zufuhr von Druckluft aus dem Druckluftvorratsbehälter (2) zu den Luftfederbälgen bzw. Liftbälgen und zur Abfuhr von Druckluft aus den Luftfederbälgen bzw. Liftbälgen in die Atmosphäre zwecks Regelung des Fahrzeugniveaus und Steuerung der anhebbaren Fahrzeugachse.
  Die Ventileinrichtungen (3, 5) sind elektrisch betätigbar. Die Ventileinrichtung (6) ist druckmittelbetätigbar. Bei den Ventileinrichtungen (5, 6) handelt es sich um 3/2-Wegeventile. Die Ventileinrichtung (3) ist in diesem Ausführungsbeispiel als Proportionalventil ausgebildet. In der Praxis werden hierfür jedoch auch häufig Kombinationen von 3/2-Wegeventilen bzw. ein 5/3-Wegeventil mit den Funktionen Druck erhöhen, Druck abbauen und Druck halten eingesetzt.

- Drucksensor (4) zur Ermittlung eines die Fahrzeugbelastung repräsentierenden Signals durch Messung des Luftdrucks in den daran angeschlossenen Luftfederbälgen (13, 23, 33, 43, 53, 63).
  Die Bestimmung des Meßwertes der Fahrzeugbelastung ($M_{mess}$) erfolgt dann unter Berücksichtigung der Querschnittsfläche der Luftfederbälge unter Anwendung der Beziehung Fahrzeugbelastung = gemessener Luftdruck multipliziert mit der Summe der Querschnittsflächen aller Luftfederbälge (13, 23, 33, 43, 53, 63).

- Fahrzeughöhensensor (83) zur Ermittlung des Abstandes zwischen dem Fahrzeugaufbau und einem mit dem Fahrwerk verbundenen Teil des Fahrzeuges.
  Der Fahrzeughöhensensor wird für die Einstellung bzw. Regelung des Niveaus des Fahrzeugaufbaus verwendet.

- Als elektronisches Steuergerät ausgebildete Einrichtung (1) zur Steuerung von Betriebsfunktionen des Fahrzeuges.
  Das elektronische Steuergerät weist üblicherweise einen Mikroprozessor, Speicher, elektrische Anschlüsse (9, 16, 26, 36, 46, 56, 66, 84, 86) zum Empfang von Signalen und elektrische Anschlüsse (7, 8, 15, 25, 35, 45, 55, 65) zur Ausgabe von Signalen auf. Des weiteren können die Anschlüsse (9, 16, 26, 36, 46, 56, 66, 84, 86) zum Empfang von Signalen mit Eingangsschaltkreisen und die Anschlüsse (7, 8, 15, 25, 35, 45, 55, 65) zur Ausgabe von Signalen mit Ausgangsverstärkern, die ebenfalls in dem Steuergerät angeordnet sind, verbunden sein. Die Einrichtung (1) kann auch als Anordnung von mehreren elektronischen Steuergeräten, die über Schnittstellen miteinander in Verbindung stehen, ausgebildet sein.

Die Zuordnung der zuvor beschriebenen Komponenten zu den einzelnen Achsen und Rädern des Anhängefahrzeuges ist wie folgt:

- Erste Achse, erstes Rad: Komponenten (10, 11, 12, 13).

- Erste Achse, zweites Rad: Komponenten (20, 21, 22, 23).

- Zweite Achse, erstes Rad: Komponenten (30, 31, 32, 33).

- Zweite Achse, zweites Rad: Komponenten (40, 41, 42, 43).

- Dritte, als anhebbare Fahrzeugachse ausgebildete Achse, erstes Rad: Komponenten (50, 51, 52, 53, 54).

- Dritte, als anhebbare Fahrzeugachse ausgebildete Achse, zweites Rad: Komponenten (60, 61, 62, 63, 64).

Das Steuergerät (1) dient zur Steuerung verschiedener Betriebsfunktionen des Fahrzeuges im Sinne der Erfindung. Zu diesen Betriebsfunktionen gehören z. B. Bremskraftsteuerung an den Radbremsen in Abhängigkeit von dem vom Bremswertgeber (85) abgegebenen Bremsbetätigungssignal, Antiblockierregelung, Steuerung der anhebbaren Fahrzeugachse, Regelung des Fahrzeugniveaus. Für die Ausführung dieser Betriebsfunktionen sind in dem Steuergerät (1) verschiedene Steuer- und Regelverfahren vorgesehen, für die die jeweils erforderlichen Eingangssignale des Steuergerätes (1) verwendet werden.

Eine Zuordnung der zuvor beschriebenen Komponenten zu den einzelnen Betriebsfunktionen kann beispielsweise in folgender Art vorgenommen werden:

Bremskraftsteuerung: Komponenten (10, 11, 20, 21, 30, 31, 40, 41, 50, 51, 60, 61, 85).

Antiblockierregelung: Komponenten (10, 11, 20, 21, 30, 31, 40, 41, 50, 51, 60, 61, 12, 22, 32, 42, 52, 62).

Steuerung der anhebbaren Fahrzeugachse: Komponenten (4, 5, 6, 53, 54, 63, 64).

Regelung des Fahrzeugniveaus: Komponenten (3, 83, 13, 23, 33, 43, 53, 63).

Hierbei sind die Betriebsfunktionen Bremskraftsteuerung und Antiblockierregelung den üblichen Funktionen eines elektronisch gesteuerten Bremssystems zuzuordnen. Demzufolge weist ein übliches Steuergerät für ein elektronisch gesteuertes Bremssystem somit wenigstens die Anschlüsse (15, 16, 25, 26, 35, 36, 45, 46, 55, 56, 65, 66, 86) auf.

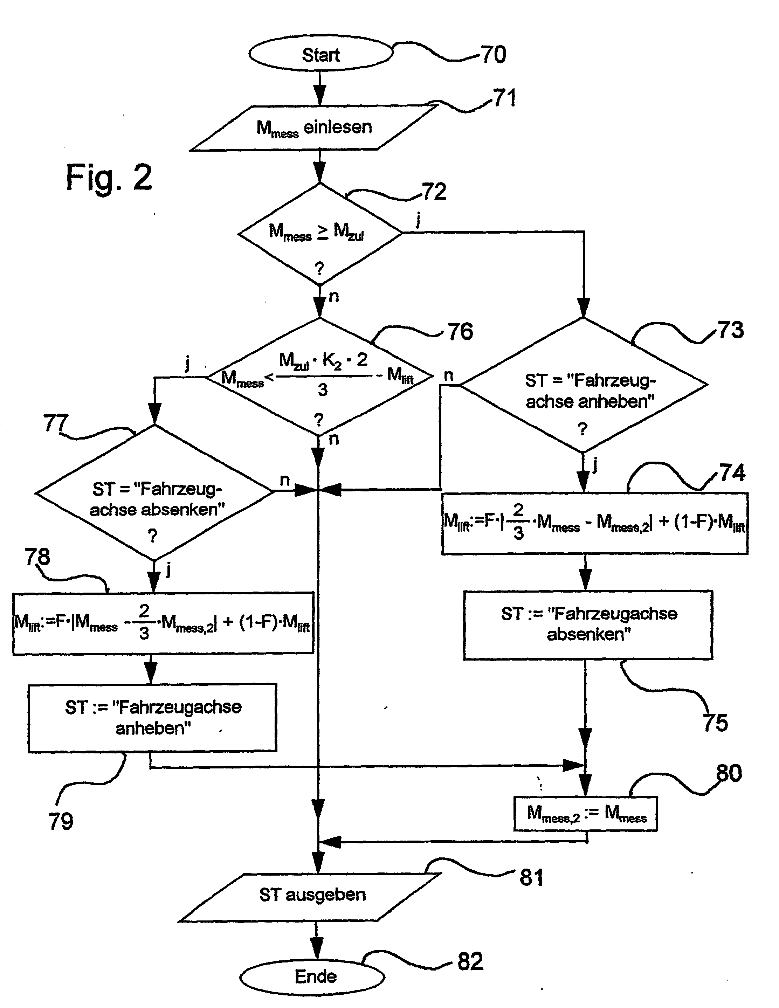

Das Steuergerät (1) führt verschiedene Verfahren zur Steuerung der Betriebsfunktionen des Fahrzeuges aus. Eines dieser Verfahren dient zur Steuerung des Anhebens und Absenkens der anhebbaren Fahrzeugachse. Dieses Verfahren ist in der Fig. 2 dargestellt. Das Verfahren gemäß Fig. 2 beginnt mit dem Block (70) "Start".

In einem darauf folgenden Datentransferblock (71) wird der Meßwert der Fahrzeugbelastung ($M_{mess}$) eingelesen. Der Meßwert ($M_{mess}$) kann beispielsweise bei der Ausführung von Verfahrensschritten zur Bremskraftsteuerung zuvor aus dem Signal des Drucksensors (4) bestimmt worden sein. Daraufhin wird in einem Verzweigungsblock (72) zunächst die Bedingung für das Absenken der anhebbaren Fahrzeugachse geprüft. Die Bedingung lautet:

$$M_{mess} \geq M_{zul} \qquad [1]$$

wobei die Größen Meßwert der Fahrzeugbelastung ($M_{mess}$) und zulässige Belastung des Fahrzeuges ($M_{zul}$) berücksichtigt werden. Wenn diese Bedingung erfüllt ist, wird zu einem weiteren Verzweigungsblock (73) verzweigt, in dem überprüft wird, ob bis dahin das Stellsignal (ST = "Fahrzeugachse anheben") erzeugt wurde. Wenn dies nicht der Fall ist, weil die anhebbare Fahrzeugachse bereits abgesenkt ist, dann ist keine Veränderung des Stellsignals (ST) erforderlich, so daß auf direktem Weg zu dem Datentransferblock (81), in dem das Stellsignal (ST) mittels des Signalausgangs (7) an das Ventil (5) ausgegeben wird, und dem Block (82), mit dem das Verfahren endet, verzweigt wird.

Wenn die in dem Verzweigungsblock (73) angegebene Bedingung jedoch erfüllt ist, weil die anhebbare Fahrzeugachse noch nicht abgesenkt ist, dann wird in einem Zuweisungsblock (74) die Masse der anhebbaren Fahrzeugachse ($M_{lift}$) aus der Differenz zwischen dem Meßwert der Fahrzeugbelastung ($M_{mess}$) bei angehobener Fahrzeugachse, welcher mit einem Korrekturfaktor ($(n-i)/i$) bewertet wird, und dem Meßwert der Fahrzeugbelastung ($M_{mess,2}$) bei abgesenkter Fahrzeugachse automatisch bestimmt, wobei vorzugsweise der Betrag der Differenz dieser Werte verwendet wird. Im vorliegenden Ausführungsbeispiel wird in einer bevorzugten Ausgestaltung der Erfindung die Masse der anhebbaren Fahrzeugachse ($M_{lift}$) unter Verwendung einer schwachen Filterung erster Ordnung (Tiefpaß) aus dem aktuellen Meßwert der Fahrzeugbelastung

($M_{mess}$) und dem vor dem Absenken der anhebbaren Fahrzeugachse zuletzt vorliegenden Meßwert der Fahrzeugbelastung ($M_{mess,2}$) gemäß folgender allgemeiner Formel berechnet:

$$M_{lift} := F \cdot \left| \frac{n-i}{n} \cdot M_{mess} - M_{mess,2} \right| + (1-F) \cdot M_{lift} \qquad [2]$$

Die Größe (n) gibt die Gesamtanzahl der Fahrzeugachsen an, die Größe (i) die Anzahl der anhebbaren Fahrzeugachsen. Im vorliegenden Beispiel wurde n = und i = 1 gesetzt, was zu der Bedingung

$$M_{lift} := F \cdot \left| \frac{2}{3} \cdot M_{mess} - M_{mess,2} \right| + (1-F) \cdot M_{lift} \qquad [3]$$

führt. Die hierbei verwendete Größe (F) stellt eine Filterkonstante dar, die nach Bedarf gewählt werden kann. Ein bevorzugter Wert ist F = 0,25. Es ist auch möglich, unter Verwendung des Wertes F = 1 die Masse der anhebbaren Fahrzeugachse ($M_{lift}$) ohne Filterung zu bestimmen.

Bei Bedarf kann die so ermittelte Masse der anhebbaren Fahrzeugachse ($M_{lift}$) dann in einem nichtflüchtigen Speicher für eine spätere Verwendung gespeichert werden, was in der Fig. 2 allerdings nicht dargestellt ist.

In einem Zuweisungsblock (75) wird dann das Stellsignal (ST = "Fahrzeugachse absenken") erzeugt. Daraufhin wird in einem weiteren Zuweisungsblock (80) der aktuelle Meßwert der Fahrzeugbelastung ($M_{mess}$) als Wert ($M_{mess,2}$) für eine spätere Verwendung gespeichert. Daraufhin werden die schon beschriebenen Blöcke (81, 82) ausgeführt, womit das Verfahren endet.

Falls die in dem Verzweigungsblock (72) überprüfte Bedingung nicht zutrifft, so wird von dort zu dem Verzweigungsblock (76) verzweigt, in dem die Bedingung zum Anheben der anhebbaren Fahrzeugachse gemäß einer Weiterbildung der Erfindung ausgewertet wird. Diese Bedingung lautet generell:

$$M_{mess} < \frac{M_{zul} \cdot K_2 \cdot (n-i)}{n} - M_{lift} \qquad [4]$$

wobei die Größen Meßwert der Fahrzeugbelastung ($M_{mess}$), zulässige Belastung des Fahrzeuges ($M_{zul}$), eine fahrzeugspezifische Konstante ($K_2$), die Gesamtanzahl der Fahrzeugachsen (n), die Anzahl der anhebbaren Fahrzeugachsen (i) sowie die Masse ($M_{lift}$) der mittels des Stellsignals (ST) anhebbaren Fahrzeugachse bzw. Fahrzeugachsen berücksichtigt werden. Im vorliegenden Beispiel wurde wiederum n = 3 und i = 1 gesetzt, was zu der Bedingung

$$M_{mess} < \frac{M_{zul} \cdot K_2 \cdot 2}{3} - M_{lift} \qquad [5]$$

führt. Wenn diese Bedingung nicht erfüllt ist, so liegt kein Bedarf zum Anheben oder Absenken der anhebbaren Fahrzeugachse vor, und es wird demzufolge das Verfahren in der zuvor bereits erwähnten Weise beendet, d. h. es werden die Blöcke (81, 82) ausgeführt. Ein bevorzugter Wert für die Konstante ($K_2$) ist $K_2 = 0,95$.

Wenn jedoch die Bedingung in dem Verzweigungsblock (76) erfüllt ist, dann wird zu einem weiteren Verzweigungsblock (77) verzweigt, in dem überprüft wird, ob bereits das Stellsignal (ST = "Fahrzeugachse anheben") erzeugt wird. Wenn dies nicht der Fall ist, muß das Stellsignal (ST) seinen Wert nicht ändern, so daß das Verfahren wiederum unter Ausführung der Blöcke (81, 82) endet.

Anderenfalls wird mit dem Zuweisungsblock (78) fortgefahren, indem in analoger Weise wie in dem Zuweisungsblock (74) die Masse der anhebbaren Fahrzeugachse ($M_{lift}$) aus den Größen ($M_{mess}$, $M_{mess,2}$) ermittelt wird, und zwar unter Verwendung der für die Formeln [2] und [3] bereits erläuterten Größen nach der folgenden allgemeinen Formel:

$$M_{lift} := F \cdot \left| M_{mess} - \frac{n-i}{n} M_{mess,2} \right| + (1-F) \cdot M_{lift} \qquad [6]$$

Im vorliegenden Beispiel wurde wiederum n = 3 und i = 1 gesetzt, was zu der Bedingung

$$M_{lift} := F \cdot \left| M_{mess} - \frac{2}{3} \cdot M_{mess,2} \right| + (1-F) \cdot M_{lift} \qquad [7]$$

führt. Daraufhin wird in einem Zuweisungsblock (79) das Stellsignal (ST = "Fahrzeugachse absenken") erzeugt. In dem darauffolgenden Zuweisungsblock (80) wird der aktuelle Meßwert der Fahrzeugbelastung ($M_{mess}$) als Wert ($M_{mess,2}$) übernommen, so daß er bei späteren Ausführungen des Verfahrens in den Zuweisungsblöcken (74, 78) zur Verfügung steht.

Es wird daraufhin in dem Datentransferblock (81) das Stellsignal (ST) ausgegeben. Das Verfahren endet daraufhin mit dem Block (82).

Falls statt der vorstehend beschriebenen Bedingung im Verzweigungsblock (76) gemäß einer anderen Weiterbildung der Erfindung die folgende Bedingung zur Erzeugung des Stellsignals (ST = "Fahrzeugachse anheben"), nämlich

$$M_{mess} < \frac{M_{zul} \cdot K_1 \cdot (n-i)}{n} \qquad [8],$$

verwendet würde, entfallen bei dem zuvor beschriebenen Verfahren gemäß Fig. 2 die Blöcke (73, 74, 77, 78). In dem Verzweigungsblock (76) steht dann die zuvor genannte Bedingung.

Ein bevorzugter Wert für die fahrzeugspezifische Konstante ($K_1$) ist $K_1 = 0,9$. Dieser Wert gilt für die in dem Ausführungsbeispiel beschriebene Variante eines Fahrzeuges mit einer anhebbaren Fahrzeugachse. Bei einer größeren Anzahl von anhebbaren Fahrzeugachsen oder einer besonders schweren anhebbaren Fahrzeugachse wäre dieser Wert zu verringern.

Im zuvor beschriebenen Ausführungsbeispiel wurde der Fall eines Fahrzeuges mit einer anhebbaren Fahrzeugachse angenommen. Die Erfindung kann, wie bereits erwähnt, auch bei Fahrzeugen mit mehreren anhebbaren Fahrzeugachsen vorteilhaft eingesetzt werden. Die Steuerung mehrerer anhebbarer Fahrzeugachsen kann dabei auf unterschiedliche Arten ausgeführt werden.

Gemäß einer ersten Art der Steuerung können alle anhebbaren Fahrzeugachsen mittels eines einzigen Stellsignals (ST) anhebbar bzw. absenkbar sein. In diesem Fall ist in den Formeln [4] und [8] die Anzahl der anhebbaren Fahrzeugachsen für die Größe (i) einzusetzen. Die Masse ($M_{lift}$) gemäß Formel [4] gibt dann die Masse aller anhebbaren Fahrzeugachsen an.

Gemäß einer zweiten Art der Steuerung können die anhebbaren Fahrzeugachsen über jeweils ein ihnen zugeordnetes Stellsignal ($ST_1$, $ST_2$, ... $ST_n$) gesteuert werden. In diesem Fall weist das zuvor beschriebene Steuergerät (1) weitere Ausgänge zur Ausgabe dieser Stellsignale ($ST_1$, $ST_2$, ... $ST_n$) auf, die in der Fig. 1 nicht dargestellt sind. Hierbei wird angenommen, daß die anhebbaren Fahrzeugachsen in aufsteigender Reihenfolge in der hier für die Stellsignale verwendeten Numerierung angehoben und in absteigender Reihenfolge abgesenkt werden, d.h. zunächst wird das Stellsignal ($ST_1$) auf "Fahrzeugachse anheben" gesetzt, dann das Stellsignal ($ST_2$) und so weiter bis zum Stellsignal ($ST_n$). Zur Festlegung der Bedingung für das Anheben können die Formeln [4] und [8] unverändert verwendet werden, wobei für die Größe (i) dann die jeweilige Nummer der anhebbaren Fahrzeugachse einzusetzen ist, d.h. die Größe (i) kann Werte von 1 bis n annehmen.

Zur Festlegung der Bedingung für das Absenken der jeweiligen Fahrzeugachse kann die folgende Formel verwendet werden:

$$M_{mess} \geq \frac{M_{zul} \cdot (n-(i-1))}{n} \qquad [9]$$

Hierbei kann die Größe (i) ebenfalls Werte von 1 bis n annehmen. Für den Fall der zuerst anzuhebenden bzw. zuletzt abzusenkenden Fahrzeugachse (i=1) entspricht die Formel [9] der Formel [1].

Wie der Fachmann ohne weiteres erkennt, ist die vorliegende Erfindung auch für eine Kombination der zuvor beschriebenen Arten der Steuerung anhebbarer Fahrzeugachsen vorteilhaft einsetzbar.

## Patentansprüche

1. Als elektronisches Steuergerät für ein elektronisch gesteuertes Bremssystem eines Fahrzeuges ausgebildete Einrichtung (1), mit Signaleingängen (86, 9) für wenigstens ein von einem Bremswertgeber (85) oder einem Anhangerbremsventil erzeugtes Bremsbetätigungssignal und ein die Fahrzeugbelastung repräsentierendes Signal und mit wenigstens einem Signalausgang (15, 25, 35, 45, 55, 65) für ein Stellsignal zur Beaufschlagung eines Bremsaktuators (11, 21, 31, 41, 51, 61) zur Betätigung wenigstens einer Radbremse (10, 20, 30, 40, 50, 60), wobei durch Verarbeitung der an den Signaleingängen (B6, 9) empfangenen Signale das Stellsignal für den Bremsaktuator (11, 21, 31, 41, 51, 61) bestimmt wird, **dadurch gekennzeichnet, daß** ein weiterer Signalausgang (7) für ein weiteres durch Verarbeitung der an den Signaleingängen (86, 9) empfangenen Signale bestimmtes Stsllsignal (ST) vorhanden ist, das zur Beaufschlagung eines weiteren Stellmittels (5, 54, 64) zum Anheben und Absenken einer anhebbaren Fahrzeugachse geeignet ist.

2. Einrichtung nach Patentanspruch 1, **dadurch gekennzeichnet, daß** ein weiterer Signaleingang (16, 26, 36, 46, 56, 66) für ein Geschwindigkeitssignal, insbesondere ein Fahrzeuggeschwindigkeitssignal und/oder ein Drehgeschwindigkeitssignal eines Rades des Fahrzeuges, vorhanden ist.

3. Einrichtung nach einem der vorhergehenden Patentansprüche, **dadurch gekennzeichnet, daß** der weitere Signalausgang (7) über eine Leitung mit dem weiteren Stellmittel (5, 54, 64) zum Anheben und Absenken der anhebbaren Fahrzeugachse verbunden ist.

4. Einrichtung und weiteres Stetimittel nach einem der vorhergehenden Patentansprüche, **dadurch gekennzeichnet, daß** das weitere Stellmittel aus einem Ventil (5) zur Steuerung eines Druckmittelflusses und einem zur Aufnahme und Abgabe des Druckmittels geeigneten Balg (54, 64) besteht, der druckmittelseitig mit dem Ventil (5) verbunden ist und die mechanische Betätigung der anhebbaren Fahrzeugachse bewirkt.

5. Einrichtung nach einem der vorhergehenden Patentansprüche, **dadurch gekennzeichnet, daß** das weitere Stellsignal (ST) zwei diskrete Signal zustände annehmen kann, insbesondere die Signalzustände "Fahrzeugachse absenken" und "Fahrzeugachse anheben".

6. Einrichtung nach einem der vorhergehenden PatentanSprüche, **dadurch gekennzeichnet, daß** weitere Anschlüsse (8, 84) für in dem Fahrzeug vorgesehene Niveauregelungsmittel (3, 83, 13, 23, 33, 43, 53, 63) zur Regelung des Fahrzeugniveaus vorhanden sind.

**7.** Einrichtung nach einem der vorhergehenden Patentansprüche, **dadurch gekennzeichnet, daß** ein Stellsignal (ST) "Fahrzeugachse anheben" erzeugt wird, wenn die Bedingung

$$M_{mess} < \frac{M_{zul} \cdot K_1 \cdot (n-i)}{n}$$

erfüllt ist, wobei die Größen Meßwert der Fahrzeugbelastung ($M_{mess}$), zulässige Belastung des Fahrzeuges ($M_{zul}$), eine fahrzeugspezifische Konstante ($K_1$), die Gesamtanzahl der Fahrzeugachsen (n) und die Anzahl der mittels des Stellsignals (ST) anhebbaren Fahrzeugachsen (i) berücksichtigt werden.

**8.** Einrichtung nach Patentanspruch 7, **dadurch gekennzeichnet, daß** ein Stellsignal (ST) "Fahrzeugachse absenken" erzeugt wird, wenn die Bedingung

$$M_{mess} \geq M_{zul}$$

erfüllt ist, wobei die Größen Meßwert der Fahrzeugbelastung ($M_{mess}$) und zulässige Belastung des Fahrzeuges ($M_{zul}$) berücksichtigt werden.

**9.** Einrichtung nach Patentanspruch 7 oder 8, **dadurch gekennzeichnet, daß** ein Stellsignal (ST) "Fahrzeugachse anheben" erzeugt wird, wenn die Bedingung

$$M_{mess} < \frac{M_{zul} \cdot K_2 \cdot (n-i)}{n} - M_{lift}$$

erfüllt ist, wobei die Größen Meßwert der Fahrzeugbelastung ($M_{mess}$), zulässige Belastung des Fahrzeuges ($M_{zul}$), eine fahrzeugspezifische Konstante ($K_2$), die Gesamtanzahl der Fahrzeugachsen (n), die Anzahl der mittels des Stellsignals (ST) anhebbaren Fahrzeugachsen (i) sowie die Masse ($M_{lift}$) der anhebbaren Fahrzeugachse bzw. Fahrzeugachsen berücksichtigt werden.

**10.** Einrichtung nach Patentanspruch 9, **dadurch gekennzeichnet, daß** die Masse ($M)_{lift}$ der anhebbaren Fahrzeugachse bzw. Fahrzeugachsen durch Differenzbildung zwischen dem Meßwert der Fahrzeugbelastung ($M_{mess}$) bei angehobener Fahrzeugachse und dem Meßwert der Fahrzeugbelastung ($M_{mess,2}$) bei abgesenkter Fahrzeugachse oder aus daraus abgeleiteten Werten automatisch bestimmt werden.

**11.** Einrichtung nach einem der Patentansprüche 7 bis 10, **dadurch gekennzeichnet, daß** das Stellsignal (ST) nur bei Stillstand des Fahrzeuges verändert wird.

**12.** Einrichtung nach einem der Patentansprüche 8 bis 11, **dadurch gekennzeichnet, daß** die fahrzeugspezifische Konstante ($K_1$, $K_2$) unter Berücksichtigung des Eigengewichts der anhebbaren Fahrzeugachsen festgelegt wird.

**13.** Einrichtung nach einem der Patentansprüche 7 bis 12, **dadurch gekennzeichnet, daß** zur Bestimmung des Meßwertes der Fahrzeugbelastung ($M_{mess}$) ein Sensiermittel verwendet wird, welches ein Signal abgibt, das die Auflagekraft des Fahrzeugaufbaus auf einer oder mehreren nicht anhebbaren Fahrzeugachsen repräsentiert.

**Claims**

**1.** Device (1) providing an electronic control apparatus for an electronically controlled braking system of a vehicle, having signal inputs (86, 9) for at least one braking operation signal generated by a braking value generator (85) or by a trailer brake valve and a signal representing the vehicle load, and having at least one signal output (15, 25, 35, 45, 55, 65) for an actuating signal for actuating a braking actuator (11, 21, 31, 41, 51, 61) for operating at least one wheel brake (10, 20, 30, 40, 50, 60), the actuating signal for the braking actuator (11, 21, 31, 41, 51, 61) being determined by processing the signals received at the signal inputs (86, 9), **characterised in that** a further signal output (7) for a further actuating signal (ST) determined by processing the signals received at the signal inputs (86, 9) is present which is suitable for actuating a further actuating means (5, 54, 64) for raising and lowering a liftable vehicle axle.

**2.** Device according to patent claim 1, **characterised in that** a further signal input (16, 26, 36, 46, 56, 66) for a speed signal, especially a vehicle speed signal and/or a rotational speed signal of a wheel of the vehicle, is present.

**3.** Device according to either one of the preceding patent claims, **characterised in that** the further signal output (7) is connected *via* a line to the further actuating means (5, 54, 64) for raising and lowering the liftable vehicle axle.

**4.** Device and further actuating means according to any one of the preceding patent claims, **characterised in that** the further actuating means consists of a valve (5) for controlling a flow of pressure medium and a bellows (54, 64) suitable for receiving and delivering the pressure medium, which bellows (54, 64) is connected to the valve (5) on the pressure medium side and effects the mechanical operation of the liftable vehicle axle.

5. Device according to any one of the preceding patent claims, **characterised in that** the further actuating signal (ST) may assume two discrete signal states, especially the signal states "lower vehicle axle" and "raise vehicle axle".

6. Device according to any one of the preceding patent claims, **characterised in that** there are further connections (8, 84) for level-regulation means (3, 83, 13, 23, 33, 43, 53, 63) provided in the vehicle for regulating the vehicle level.

7. Device according to any one of the preceding patent claims, **characterised in that** an actuating signal (ST) "raise vehicle axle" is generated when the condition

$$M_{meas} < \frac{M_{perm} \cdot K_1 \cdot (n-i)}{n}$$

is fulfilled, account being taken of the parameters measured value of vehicle load ($M_{meas}$), permissible vehicle load ($M_{perm}$), a vehicle-specific constant ($K_1$), the total number of vehicle axles (n) and the number of vehicle axles (i) raisable by means of the actuating signal (ST).

8. Device according to patent claim 7, **characterised in that** an actuating signal (ST) "lower vehicle axle" is generated when the condition

$$M_{meas} \geq M_{perm}$$

is fulfilled, account being taken of the parameters measured value of vehicle load ($M_{meas}$) and permissible vehicle load ($M_{perm}$).

9. Device according to patent claim 7 or 8, **characterised in that** an actuating signal (ST) "raise vehicle axle" is generated when the condition

$$M_{meas} < \frac{M_{perm} \cdot K_2 \cdot (n-i)}{n} - M_{lift}$$

is fulfilled, account being taken of the parameters measured value of vehicle load ($M_{meas}$), permissible vehicle load ($M_{perm}$), a vehicle-specific constant ($K_2$), the total number of vehicle axles (n), the number of vehicle axles (i) raisable by means of the actuating signal (ST) and the mass ($M_{lift}$) of the liftable vehicle axle or vehicle axles.

10. Device according to patent claim 9, **characterised in that** the mass ($M_{lift}$) of the liftable vehicle axle or vehicle axles is determined automatically by forming the difference between the measured value of the vehicle load ($M_{meas}$) with the vehicle axle raised and the measured value of the vehicle load ($M_{meas.2}$) with the vehicle axle lowered or from values derived therefrom.

11. Device according to any one of patent claims 7 to 10, **characterised in that** the actuating signal (ST) is changed only when the vehicle is stationary.

12. Device according to any one of patent claims 8 to 11, **characterised in that** the vehicle-specific constant ($K_1$, $K_2$) is fixed taking account of the liftable vehicle axles' own weight.

13. Device according to any one of patent claims 7 to 12, **characterised in that** the measured value of the vehicle load ($M_{meas}$) is determined using a sensing means which produces a signal representing the bearing force of the vehicle structure on one or more non-liftable vehicle axles.

## Revendications

1. Dispositif (1) réalisé en tant qu'appareil de commande électronique pour un système de frein commandé électroniquement d'un véhicule, avec des entrées de signal (86, 9) pour au moins un signal de manoeuvre de frein généré par un générateur de valeur de frein (85) ou une soupape de frein de remorque et un signal représentant la charge du véhicule et avec au moins une sortie de signal (15, 25, 35, 45, 55, 65) pour un signal de réglage en vue de l'alimentation d'un organe de manoeuvre de frein (11, 21, 31, 41, 51, 61) en vue de la manoeuvre d'au moins un frein de roue (10, 20, 30, 40, 50, 60) par traitement des signaux reçus aux entrées de signal (86, 9) et déterminer le signal de réglage pour l'organe de manoeuvre de frein (11, 21, 31, 41, 51, 61), **caractérisé en ce qu'**une autre sortie de signal (7) pour un autre signal de réglage (ST) déterminé par traitement des signaux reçus aux entrées de signal (86, 9) est présente, qui est appropriée pour l'alimentation d'un autre moyen de réglage (5, 54, 64) en vue de l'élévation et de l'abaissement d'un essieu de véhicule pouvant être soulevé.

2. Dispositif selon la revendication 1, **caractérisé en ce qu'**une autre entrée de signal (16, 26, 36, 46, 56, 66) pour un signal de vitesse, en particulier un signal de vitesse de véhicule et/ou un signal de vitesse de rotation d'une roue du véhicule, est prévue.

3. Dispositif selon une des revendications précédentes, **caractérisé en ce que** l'autre sortie de signal (7) est reliée par l'intermédiaire d'une ligne à l'autre moyen de réglage (5, 54, 64) en vue du soulèvement et de l'abaissement de l'essieu de véhicule pouvant être soulevé.

4. Dispositif et autre moyen de réglage selon une des revendications précédentes, **caractérisé en ce que** l'autre moyen de réglage se compose d'une soupape (5) en vue de la commande d'un écoulement de fluide sous pression et d'un soufflet (54, 64) approprié pour la réception et la délivrance du fluide sous pression, qui est relié côté fluide sous pression à la soupape (5) et provoque la manoeuvre mécanique de l'essieu de véhicule pouvant être soulevé.

5. Dispositif selon une des revendications précédentes, **caractérisé en ce que** l'autre signal de réglage (ST) peut prendre deux états de signal discrets, en particulier les états de signal "abaisser l'essieu du véhicule" et "soulever l'essieu du véhicule".

6. Dispositif selon l'une des revendications précédentes, **caractérisé en ce que** d'autres raccordements (8, 84) pour des moyens de régulation de niveau (3, 83, 13, 23, 33, 43, 53, 63) prévus dans le véhicule, sont prévus en vue de la régulation du niveau du véhicule.

7. Dispositif selon une des revendications précédentes, **caractérisé en ce qu'**un signal de réglage (ST) "soulever essieu du véhicule" est généré, lorsque la condition

$$M_{mes} < \frac{M_{adm} \cdot K_1 \cdot (n-1)}{n}$$

est remplie, les grandeurs valeur de mesure de la charge du véhicule ($M_{mes}$), charge admissible du véhicule ($M_{adm}$), une constante particulière au véhicule ($K_1$), le nombre total des essieux du véhicule (n) et le nombre des essieux de véhicule (i) pouvant être soulevés à l'aide du signal de réglage (ST) étant prises en considération.

8. Dispositif selon la revendication 7, **caractérisé en ce qu'**un signal de réglage (ST) "abaisser l'essieu du véhicule" est généré, lorsque la condition

$$M_{mes} \geq M_{adm}$$

est remplie, les grandeurs valeur de mesure de la charge du véhicule ($M_{mes}$) et la charge admissible du véhicule ($M_{adm}$) étant prises en considération.

9. Dispositif selon la revendication 7 ou 8, **caractérisé en ce qu'**un signal de réglage (ST) "soulever l'essieu du véhicule" est généré, lorsque la condition

$$M_{mes} < \frac{M_{adm} \cdot K_2 \cdot (n-1)}{n} - M_{élév}$$

est remplie, les grandeurs valeur de mesure de la charge du véhicule ($M_{mes}$), charge admissible du véhicule ($M_{adm}$), une constante spécifique du véhicule ($K_2$), le nombre total des essieux du véhicule (n), le nombre des essieux du véhicule (i) pouvant être soulevés à l'aide du signal de réglage (ST) ainsi que la masse ($M_{élév}$) des essieux du véhicule pouvant être soulevés ou des essieux du véhicule étant pris en considération.

10. Dispositif selon la revendication 9, **caractérisé en ce que** la masse ($M_{élév}$) de l'essieu de véhicule pouvant être soulevé ou les essieux du véhicule étant déterminé automatiquement par formation de la différence entre la valeur de mesure de la charge du véhicule ($M_{mes}$) dans le cas de l'essieu de véhicule soulevé et la valeur de mesure de la charge du véhicule ($M_{mes,2}$) lors de l'essieu de véhicule abaissé ou à partir de valeurs dérivées de celles-ci.

11. Dispositif selon l'une des revendications 7 à 10, **caractérisé en ce que** le signal de réglage (ST) est modifié uniquement lors de l'arrêt du véhicule.

12. Dispositif selon une des revendications 8 à 11, **caractérisé en ce que** la constante spécifique du véhicule ($K_1$, $K_2$) est déterminée en tenant compte de l'équilibre des essieux de véhicule pouvant être soulevés.

13. Dispositif selon une des revendications 7 à 12, **caractérisé en ce qu'**en vue de la détermination de la valeur de mesure de la charge du véhicule ($M_{mes}$) un moyen de détection est utilisé, qui délivre un signal qui représente la force d'appui de la carrosserie du véhicule sur un ou plusieurs essieux ne pouvant pas être soulevés.

Fig.1

EP 0 956 983 B1

12

## Fig. 2

**Start** — 70

**$M_{mess}$ einlesen** — 71

$M_{mess} \geq M_{zul}$ ? — 72

$M_{mess} < \dfrac{M_{zul} \cdot K_2 \cdot 2}{3} - M_{lift}$ ? — 76

ST = "Fahrzeug-achse anheben" ? — 73

ST = "Fahrzeug-achse absenken" ? — 77

$M_{lift} := F \cdot \left| \dfrac{2}{3} \cdot M_{mess} - M_{mess,2} \right| + (1-F) \cdot M_{lift}$ — 74

$M_{lift} := F \cdot \left| M_{mess} - \dfrac{2}{3} \cdot M_{mess,2} \right| + (1-F) \cdot M_{lift}$ — 78

ST := "Fahrzeugachse anheben" — 79

ST := "Fahrzeugachse absenken" — 75

$M_{mess,2} := M_{mess}$ — 80

**ST ausgeben** — 81

**Ende** — 82